# EUROPEAN PATENT APPLICATION

(11) **EP 1 944 927 A1**
(43) Date of publication of application: **16.07.2008**
(21) Application number: 06791247.7
(22) Date of filing: 12.10.2006
(51) Int. Cl.: H04L 12/58, H04Q 7/00

(54) **A MULTIMEDIA MESSAGE CENTER AND A TERMINAL AND THE CORRESPONDING PROCESSING METHOD OF MULTIMEDIA MESSAGES**

(30) Priority: 13.10.2005 CN 200510100352
(71) Applicant: Huawei Technologies Co., Ltd., Longgang District Shenzhen Guangdong 518129 (CN)
(72) Inventor: BAI, Guangchang, 518129 Shenzhen, Guangdong Province (CN); WANG, Zheng, 518129 Shenzhen, Guangdong Province (CN)
(74) Representative: Thun, Clemens
(86) International application number: PCT/CN2006/002676
(87) International publication number: WO 2007/041960

(57) **Abstract**

A method for processing the multimedia message, MM, includes: notifying, by the a multimedia message service center, MMSC, the home MMSC of a recipient terminal, to receive the MM; requesting, by the recipient terminal according to the notification, to acquire the MM from the home MMSC of the recipient terminal; sending, by the home MMSC of the recipient terminal, the MM to the recipient terminal; and confirming with the MMSC that the MM has been received according to the address delivered by the MMSC, when the recipient terminal receives the MM. This method may prevent the bill evasion.

## Description

### Field of the Invention

The present invention relates to the technical field of Multimedia Message Service, MMS, and in particular, to a Multimedia Message Service Center, MMSC, terminal and a method for processing MM.

### Background of the Invention

In recent years, a lot of telecom operators are deploying and operating multimedia message service, MMS, on the network. The MMS has been regarded as a spotlight after the short messages service, SMS, and enhanced message service.

The processing procedures of multimedia message and short message are quite the same, and the greatest difference lies in that, when receiving messages, in SMS, the recipient terminal receives the short message pushed by the SMC; in MMS, the home MMSC of the recipient terminal, first pushes the address of the message center through notification, then the recipient terminal initiatively downloads the multimedia message from the MMSC according to the MMSC address; after the download is finished, the recipient terminal sends message to MMSC for confirmation.

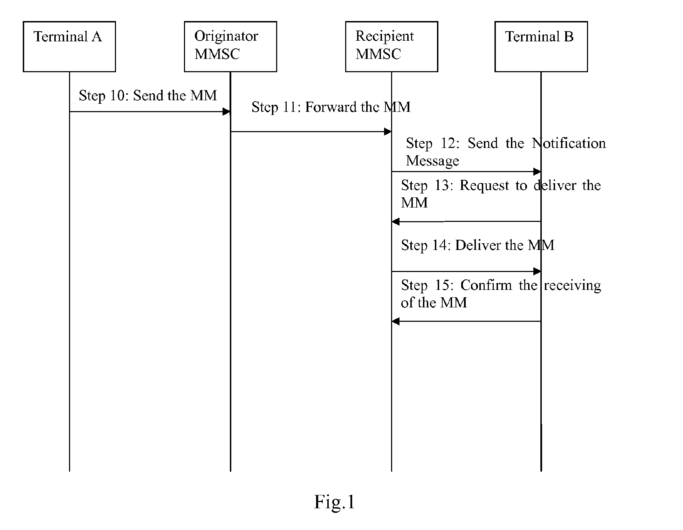

For multimedia message, the best charging trigger point is after receiving the MM. In the case of the deferred retrieval, the charging trigger point is after the MMSC receives the confirmation, M-Acknowledge.ind, sent by the recipient mobile terminal. In the case of immediate retrieval, the charging trigger point is after the MMSC receives the response to notification. M-Notifyresp.ind, sent by the recipient mobile terminal. In the process of receiving the MM, according to different receiving manners, e.g. the terminal-to-terminal deferred retrieval or terminal-to-terminal immediate retrieval, the destination address of the confirmation, M-Acknowledge.ind or M-Notifyresp.ind, returned by the recipient terminal to MMSC is based on the MMSC address set on the recipient terminal. In the above charging mode, some deliberate user of the recipient terminal may evade the MM charge by changing the address of the MMSC, which brings risks for the service operation. Referring to Figure 1, in which transferring multimedia message occurs between terminal A and B, the MMSC address setting on the terminal A is right while the MMSC address setting on the terminal B is wrong, the procedure runs in the following way.

In step 10, an originator terminal A sends an MM to the home MMSC of the terminal. Because the MMSC address configuration on the terminal A is right, the terminal A may successfully send the MM.

In step 11, the MMSC of the originator terminal A forwards the MM to the home MMSC of a recipient terminal B; the transferring process belongs to the communication process among the MMSCs, which may succeed under normal condition.

In step 12, after the home MMSC of the terminal B receives the MM, the MMSC sends the notification, M-Notification.ind, to the recipient terminal B; because the notification, carrying by the short message, locates the recipient terminal B according to the MSISDN number, so that the recipient terminal B may successfully receive the notification, M-Notification.ind. sent by the recipient terminal B MMSC.

In steps 13 and 14, when the recipient terminal B acquires the MM from the home MMSC of the terminal, the recipient terminal B may successfully download the MM according to the address message of the MMSC in the notification.

In step 15, when the recipient terminal B succeeds in receiving the MM, the terminal sends confirmation, which is M-Acknowledge.ind in the case of the deferred retrieval or M-NOtifyresp.ind in the case of immediate retrieval to the home MMSC of the terminal; the address of the MMSC in the confirmation is the address set on the recipient terminal B; if the address of the MMSC set on the recipient terminal B is wrong, the confirmation may not be able to arrive at the MMSC of the recipient terminal B. Because the MMSC of the recipient terminal B does not receive the confirmation (M-Acknowledge.ind or M-Notificaition.ind), the recipient terminal B is taken for failed in the MM download, which leads to the failure in the billing for the user after the MM expires, or the bill rollback during the confirmation stage of the prepaid charge.

In summary, the recipient could configure the wrong address deliberately in both the terminal-to-terminal or service provider to terminal service, causing the failure of the bill in the MMSC to escape from the charge, which leads to the loss of the service provider of the MMS.

### Summary of the Invention

This disclosure provides a method for processing the MM in MMSC and terminal to prevent the bill evasion.

The present invention could be realized through the following method.

When the recipient terminal receives the MM, the terminal confirms with the MMSC, according to the address of the home MMC of the terminal, whether the MM has been received; then the confirmation is forced to return to the MMSC address delivered by the MMSC instead of the MMSC address configured in the user terminal; in this condition, even if the recipient terminal user changes the originally configured recipient MMSC address after the new MM is received, the recipient MMSC may still charge in response to the message so as to avoid the bill evasion.

### Brief Description of the Drawings

Figure 1 is a flowchart showing an MM transferring process in the prior art;

Figure 2 is a schematic flowchart showing the MM transferring method in an embodiment of the present invention; and

Figure 3 is a schematic diagram showing the MMSC and the terminal in an embodiment of the present invention.

### Detailed Description of the Embodiments

The MMSC receiving method of the present invention is that the recipient MMSC, notifies the recipient terminal to receive the MM by sending the notification carrying the MMSC address when receiving the MM; the recipient terminal requests to obtain the MM from the MMSC according to the notification, and then MMSC of the terminal send the MM requested to the recipient terminal; in the end, the recipient terminal confirms with the MMSC whether the MM has been received according to the MMSC address delivered by the home MMSC of the recipient terminal; then the recipient terminal is forced to return the confirmation using the MMSC address delivered by the MMSC, so that even if the recipient terminal user changes the originally configured recipient MMSC address, the recipient MMSC may still charge in response to the message so as to avoid the bill evasion.

Additionally, it is supposed to be made clear that the MM in the present invention, which could either be the MM sent by the originator terminal or the service provider, does not concern the essence of the invention and will not be detailed.

The following are detailed description of embodiments.

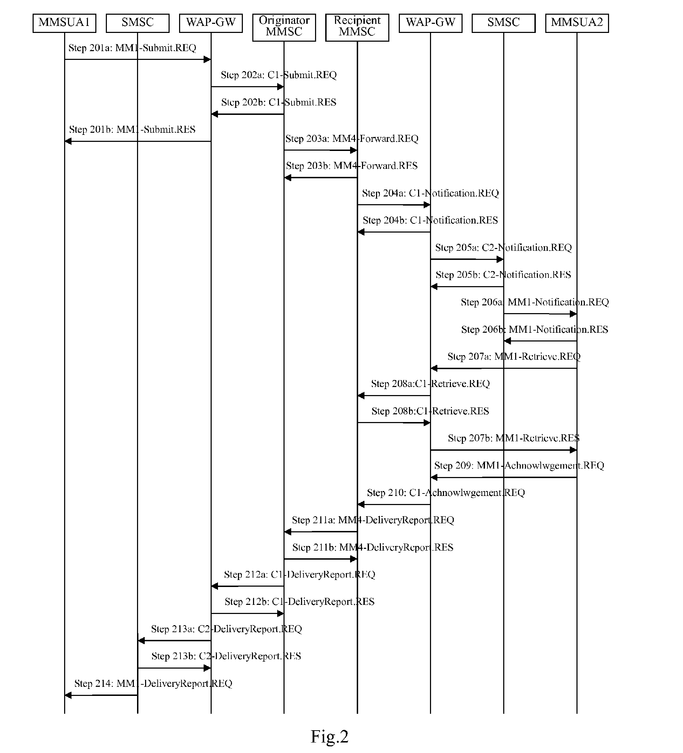

Figure 2 is a flowchart showing the terminal-to-terminal transferring method of one embodiment.

The MM is transferred between an MSUA1 terminal and an MSUA2 terminal. Originator MMSC is the home MMSC of MSUA1, and Recipient MMSC is the home MMSC of the MSUA2; the MM is forwarded between the terminal and the MMSC via WAP gateway and the transferring process is as follows:

Steps 201a and 201b: The terminal MSUA1 sends the request message for MM submission (MM1-submit.REQ) to the accessed WAP gateway via an MM interface, carrying the sent MM; the accessed WAP gateway sends back the MM submission response message (MM1-Submit.RES) to the terminal MSUA1.

Steps 202a and 202b: The accessed WAP gateway sends submission request message (C1-Submit. REQ) to the Originator MMSC via an MM interface, carrying the MM to be sent; the originator MMSC returns the response message of the submission request (C1-Submit. RES) to the WAP gateway.

Steps 203a and 203b: The originator MMSC sends an MM forwarding request message (MM4-Forward. REQ) to the recipient MMSC, carrying the MM to be sent; the recipient MMSC sends back the response message (MM4-Forward.RES) of the forwarding request to the originator MMSC.

Steps 204a and 204b: The recipient MMSC sends an MM notification message (C1-Notification. REQ) to the WAP gateway, and the WAP gateway returns the response message of the MM notification (C1-Notification. RES).

Steps 205a and 205b: The WAP gateway sends the notification message (C2-Notification. REQ) to an SMSC, and the SMSC sends back the response message to the MM notification message.

Steps 206a and 206b: The SMSC sends the MM notification message (MM1-Notification. REQ) to the recipient terminal MSUA 2, carrying the address of the recipient MMSC; the terminal MSUA 2 sends back the response message of the MM notification message (MM1-Notification. RES).

Steps 207a and 207b: The recipient terminal MSUA 2 sends the MM delivery request message (MM1-Retrieve.REQ) to the WAP gateway; then the WAP gateway delivers the MM request confirmation message (MM1-Retrieve.RES) to the recipient terminal MSUA 2 after the recipient MMSC sends the MM to it.

Steps 208a and 208b: The WAP gateway sends the MM request message (C1-Retrieve. REQ) to the recipient MMSC, and the recipient MMSC sends an MM (C1-Retrieve. RES) to the WAP gateway.

Steps 209 and 210: The recipient terminal MSUA 2 sends the MM receive confirmation message to the recipient MMSC via the WAP gateway, using the MM address which is sent by the recipient MMSC to recipient terminal MSUA2 via the notification message.

The rest steps from 211a and 211b to 214a and 214b are charge triggering and returning the delivery report to the originator terminal MSUA1, which will not be detailed here.

In the above process, the recipient terminal MSUA1 receives the recipient MMSC address in the notification of the arrival of the MM sent by recipient MMSC, and also in the retrieval response of the MM sent by the recipient MMSC to the terminal; the address is stored in the storage area which can not be modified by the user; after the user retrieves the MM, the confirmation message has to be returned to the recipient MMSC according to the MMSC address; in this situation, even if the user changes the originally configured address in the MMSC after a new MM has been received, the recipient MMSC may still execute the bill charging, thereby avoiding the bill evasion.

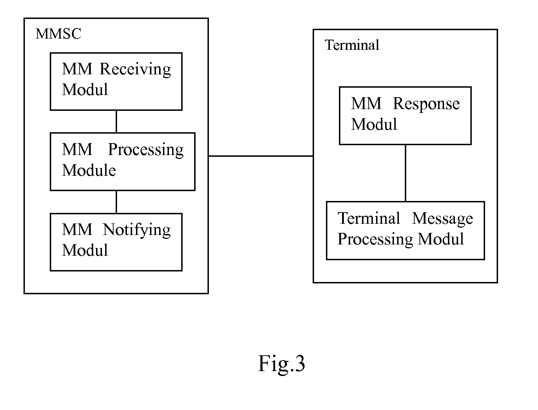

The present invention provides an MMSC and a terminal receiving the MM delivered by the MMSC; an embodiment is shown in Figure 3, and the MMSC includes:

an MM receiving module, adapted to receive the MM from the MMSC of the originator terminal;

an MM processing module, adapted to send the MM received by the MM receiving module, etc;

an MM notification module, adapted to send the MM notification carrying the MMSC address to the recipient terminal when the MM receiving module receives the MM; the elements in the notification message (MM1-notification. REQ) notifying the recipient terminal are extended as described in table 1. The extended elements are the recipient MMSC address:

| Element | Attribute | Description |
|---|---|---|
| Message Type | Mandatory | Identifies this message as MM1_notification.REQ |
| Transaction ID | Mandatory | The identification of the MM1_notification.REQ/MM1_notification.RES pair. |
| ............... | .......... | .................... |
| Recipient MMSC address | Optional | Recipient MMSC relay/server address |

### Table 1

The configurations of the terminal receiving the MM delivered by the MMSC are:

a terminal processing module, adapted to perform the processing of receiving, sending, etc. the MM; and,

an MM response module, adapted to send the notification response message to the MMSC according to the recipient MMSC address when receiving the notification message carrying the MMSC address; the extended elements in the retrieval response message are described in table 2; the extended elements are the newly added recipient MMSC address:

**Table 2**

| Element | Configuration | Description |
|---|---|---|
| Message Type | Mandatory | Identifies this message as MM1_retrieve.RES. |
| ····· | ····· | ····· |
| Recipient MMSC address | Optional | Recipient MMSC relay/server address |

In summary, the recipient MMSC carries the recipient MMSC address to the recipient terminal when notifying the recipient terminal users or delivering the MM to the recipient terminal, and the recipient terminal stores the recipient MMSC address in the storage area which can not be modified; the recipient terminal returns the MM receiving confirmation message to the recipient MMSC according to the address, thereby avoiding the bill evasion.

Additional advantages and modifications will readily occur to those skilled in the art. Therefore, the invention in its broader aspects is not limited to the specific details and representative embodiments shown and described herein. Accordingly, various modifications and variations may be made without departing from the scope of the invention as defined by the appended claims and their equivalents.

## Claims

1. A method for receiving a multimedia message, MM, comprising:
notifying, by the a multimedia message service center, MMSC, the home MMSC of a recipient terminal, to receive the MM;
requesting, by the recipient terminal according to the notification, to acquire the MM from the home MMSC of the recipient terminal;
sending, by the home MMSC of the recipient terminal, the MM to the recipient terminal; and
confirming with the MMSC that the MM has been received according to the address delivered by the MMSC, when the recipient terminal receives the MM.

2. The method according to claim 1, wherein,
the address delivered by the home MMSC of the recipient terminal is carried and delivered through the notification message notifying the recipient terminal to receive the MM.

3. The method according to claim 2, wherein the notification message carries the MMSC address through extending the message to include the MMSC address information elements.

4. The method according to claim 1, wherein the MMSC address delivered by the home MMSC of the recipient terminal, is carried and delivered through the MM.

5. The method according to claim 4, wherein the MM delivered carries the MMSC address through extending the MM to include the MMSC address information elements.

6. The method according to any of claims 1-5, wherein the MM is sent by the originator terminal.

7. The method according to any of claims 1-5, wherein the MM is sent by the MM service provider.

8. An MMSC comprising,
an MM receiving module, adapted to receive the MM;
an MM processing module, adapted to perform the related processing to the MM received by the MM receiving module, wherein,
the MMSC further comprising,
an MM notification module, adapted to send the MM carrying the MMSC address to a recipient terminal when the MM is received by the MM receiving module.

9. The method for processing the MM by using the MMSC according to claim 8, wherein,
the MMSC receives the MM; and
the MMSC sends to a recipient terminal the MM notification message carrying the MMSC address.

10. The terminal for receiving the MM sent by the MMSC according to claim 8, comprising,
a terminal message processing module, adapted to receive or send the MM, wherein the terminal further comprises:
an MM response module, adapted to send response message to the MMSC address when receiving the notification message carrying the MMSC address.

11. The method for receiving the MM by the terminal according to claim 10, comprising,
receiving the message carrying the MMSC address sent by the MMSC; and
sending a response message carrying the MMSC address to the MMSC.
